# FASCICULE DE BREVET EUROPEEN

(11) **EP 2 735 473 B1**
(45) Date de publication et mention de la délivrance du brevet: **01.07.2015**
(21) Numéro de dépôt: 13194595.8
(22) Date de dépôt: 27.11.2013
(51) Int. Cl.: B60N 2/235, B60N 2/20

(54) **Siège de véhicule avec mécanisme d'articulation**
Fahrzeugsitz mit Gelenkeinrichtung zur Neigungsverstellung
Vehicle seat with articulation mechanism

(30) Priorité: 27.11.2012 FR 1261263
(43) Date de publication de la demande: 28.05.2014
(73) Titulaire: Faurecia Sièges d'automobile, 92000 Nanterre (FR)
(72) Inventeur: Couasnon, Christian, 61100 Flers (FR); Ruppe, Cédric, 61440 Messei (FR)
(74) Mandataire: Cabinet Plasseraud

(56) Documents cités:
- DE-A1-102009 029 858
- FR-A1- 2 601 571
- FR-A1- 2 822 419
- FR-A1- 2 900 105
- US-A- 4 997 223

## Description

L'invention se rapporte à un siège de véhicule.

En particulier, l'invention se rapporte à un siège de véhicule du type comprenant :
- une assise et un dossier monté pivotant sur l'assise autour d'un axe de rotation, le dossier présentant une position redressée réglable et une position rabattue,
- au moins un mécanisme d'articulation adapté pour régler la position redressée du dossier, le mécanisme d'articulation comportant un boîtier délimitant un logement, un système de verrouillage placé dans le logement du boîtier et un organe de commande actionnable par un utilisateur, le boîtier présentant un bord périphérique extérieur et un encombrement radial défini par une enveloppe cylindrique qui s'étend selon l'axe de rotation et qui passe par le bord extérieur dudit boîtier, le boîtier comportant un premier flasque solidaire de l'assise et un deuxième flasque solidaire du dossier, le deuxième flasque étant monté pivotant autour de l'axe de rotation sur le premier flasque, le système de verrouillage étant adapté pour présenter un état verrouillé dans lequel ledit système de verrouillage interdit un pivotement du deuxième flasque par rapport au premier flasque, et un état déverrouillé dans lequel ledit système de verrouillage autorise ledit pivotement, l'organe de commande présentant une position de repos vers laquelle ledit organe de commande est sollicité, et étant déplaçable vers une position d'actionnement, l'organe de commande étant relié au système de verrouillage de telle manière que, dans la position de repos dudit organe de commande, le système de verrouillage est dans l'état verrouillé, et dans la position d'actionnement dudit organe de commande, le système de verrouillage est dans l'état déverrouillé,
- un système de neutralisation adapté pour permettre de déplacer le dossier entre les positions redressée et rabattue, le système de neutralisation étant disposé à l'extérieur du boîtier du mécanisme d'articulation, et comportant un organe de neutralisation actionnable par l'utilisateur et un organe de maintien, l'organe de neutralisation étant déplaçable entre une position inactive dans laquelle ledit organe de neutralisation autorise un déplacement de l'organe de commande entre ses positions de repos et d'actionnement, et une position active dans laquelle ledit organe de neutralisation place l'organe de commande dans la position d'actionnement, l'organe de maintien étant déplaçable par rapport à l'assise entre une position de maintien dans laquelle ledit organe de maintien maintient l'organe de neutralisation dans la position active, et une position escamotée écartée de la position de maintien.

Avec un tel siège de véhicule, le dossier peut présenter plusieurs inclinaisons dans sa position redressée pour améliorer le confort de l'occupant. Il peut également être déplacé vers sa position rabattue notamment pour permettre un accès à des places arrières ou à un espace arrière situé derrière le siège de véhicule, ou pour utiliser une surface arrière du siège de véhicule comme une tablette.

Un siège de véhicule de ce type donnant entière satisfaction est connu du document FR 2 900 105 A1. Dans le siège de véhicule connu, l'organe de maintien se présente sous la forme d'une came de maintien montée pivotante sur l'assise en dessous d'une extrémité de l'armature du dossier, et venant en position de maintien lorsque l'organe de neutralisation passe de la position inactive à la position active. Un poussoir est monté pivotant sur le dossier pour déplacer la came de maintien lors du retour du dossier vers la position redressée.

Le système de neutralisation présente une structure telle que son montage sur les armatures de l'assise et du dossier est imposé par des contraintes de positionnement relatif, et peut difficilement être adapté pour placer le système de neutralisation en différentes parties du siège.

L'invention vise à résoudre les problèmes évoqués ci-dessus.

A cet effet, l'invention propose un siège du type précité dans lequel au moins une partie essentielle (c'est à-dire plus de 50%, de préférence plus de 75%, notamment plus de 90%) de l'organe de neutralisation et au moins une partie essentielle (c'est à-dire plus de 50%, de préférence plus de 75%, notamment plus de 90%) de l'organe de maintien sont contenues dans l'encombrement radial du boîtier du mécanisme d'articulation.

La disposition de l'essentiel des différents composants du système de neutralisation dans l'encombrement radial du mécanisme d'articulation permet d'améliorer la compacité du système de neutralisation et d'en simplifier la structure. Le système de neutralisation présente ainsi une adaptabilité améliorée lui permettant d'être monté aisément sur différentes parties du siège.

En particulier, chacun des premier et deuxième flasques peut présenter une surface latérale extérieure opposée au logement et sensiblement perpendiculaire à l'axe de rotation, et l'assise peut comporter une bride s'étendant en regard de la surface latérale extérieure de l'un des flasques choisi parmi les premier et deuxième flasques, le système de neutralisation étant disposé entre la bride et la surface latérale extérieure dudit flasque.

L'organe de neutralisation peut être monté pivotant sur l'axe de rotation et présenter une dimension maximale mesurée perpendiculairement à l'axe de rotation inférieure ou sensiblement égale à une dimension maximale mesurée perpendiculairement à l'axe de rotation du bord extérieur du boîtier.

L'organe de maintien peut être monté pivotant sur l'assise selon un axe de pivotement parallèle à l'axe de rotation, ledit axe de pivotement étant situé à l'intérieur de l'enveloppe définissant l'encombrement radial du boîtier du mécanisme d'articulation.

Le système de neutralisation peut comporter en outre un dispositif de couplage adapté pour déplacer l'organe de maintien de la position escamotée à la position de maintien lorsque l'organe de neutralisation est déplacé depuis la position inactive vers la position active. En particulier, le dispositif de couplage peut comprendre :
- deux éléments de couplage constitués l'un par un pion et l'autre par une surface de guidage, et portés l'un par l'organe de neutralisation et l'autre par l'organe de maintien, la surface de guidage présentant une portion de came et une portion d'accrochage,
- un organe de sollicitation adapté pour maintenir l'élément de couplage porté par l'organe de maintien contre l'élément de couplage porté par l'organe de neutralisation,
les éléments de couplage étant agencés pour que le pion soit déplacé le long de la portion de came de la surface de guidage lorsque l'organe de neutralisation est déplacé depuis la position inactive vers la position active, et pour que le pion soit placé dans la portion d'accrochage de la surface de guidage lorsque l'organe de neutralisation est dans la position active.

Le système de neutralisation peut comporter en outre un dispositif de libération adapté pour déplacer l'organe de maintien de la position de maintien à la position escamotée dans une position déterminée du deuxième flasque par rapport au premier flasque lors du pivotement du dossier dans un sens de redressement depuis la position rabattue vers la position redressée.

Une partie essentielle (c'est à-dire plus de 50%, de préférence plus de 75%, notamment plus de 90%) du dispositif de libération peut alors être contenue dans l'encombrement radial du boîtier du mécanisme d'articulation.

Le dispositif de libération peut comprendre :
- une butée déplaçable conjointement avec le dossier selon une course, et
- une patte associée à l'organe de maintien et s'étendant dans la course de la butée, la patte étant adaptée pour interférer avec la butée dans la position déterminée du deuxième flasque par rapport au premier flasque lors du pivotement du deuxième flasque par rapport au premier flasque dans le sens de redressement.

La patte peut être sollicitée vers une position rapprochée dans laquelle ladite patte est en contact avec l'organe de maintien, et déplaçable vers une position écartée dans laquelle ladite patte est écartée de l'organe de maintien lors du pivotement du dossier dans un sens de rabattement depuis la position redressée vers la position rabattue.

Dans un mode de réalisation, le dossier peut comporter une armature présentant deux surfaces latérales opposées sensiblement perpendiculaires à l'axe de rotation, l'organe de neutralisation et l'organe de maintien étant placés du côté de l'une des surfaces latérales de l'armature du dossier, la butée étant fixée sur ladite surface latérale.

Dans un autre mode de réalisation, de façon complémentaire ou indépendante des dispositions définies précédemment concernant notamment l'agencement des organes de neutralisation et de maintien dans l'encombrement radial du boîtier, le système de neutralisation comprend un dispositif de mémorisation adapté pour permettre un retour du deuxième flasque dans une position déterminée réglable lors du pivotement du dossier dans le sens de redressement. Pour ce faire, la butée du dispositif de libération peut être débrayable. La butée peut ainsi être montée déplaçable par rapport au dossier entre une position désolidarisée dans laquelle ladite butée est immobile par rapport au dossier, et une position solidarisée dans laquelle ladite butée est solidarisée au dossier, la butée étant reliée à l'organe de neutralisation de telle manière que, dans la position inactive dudit organe de neutralisation, ladite butée est dans la position désolidarisée, et dans la position active dudit organe de neutralisation, ladite butée est dans la position solidarisée.

En particulier, le dispositif de libération peut comprendre en outre une douille solidaire du deuxième flasque et s'étendant selon l'axe de rotation, la butée étant montée pivotante autour de l'axe de rotation et étant solidarisée à la douille dans la position solidarisée de ladite butée et écartée de la douille dans la position désolidarisée de ladite butée.

Le système de verrouillage peut comprendre une denture intérieure portée par le deuxième flasque et au moins un grain monté déplaçable à l'intérieur du logement du boîtier selon une direction radiale par rapport à l'axe de rotation, le grain étant pourvu d'une denture extérieure adaptée pour coopérer avec la denture intérieure du deuxième flasque, la denture extérieure du grain étant en prise avec la denture intérieure du deuxième flasque dans l'état verrouillé du système de verrouillage et étant écartée de la denture intérieure du deuxième flasque dans l'état déverrouillé du système de verrouillage, la douille et la butée présentant respectivement des dentures, l'une intérieure et l'autre extérieure, adaptées pour coopérer l'une avec l'autre, la denture de la butée étant en prise avec la denture de la douille dans la position solidarisée de ladite butée et la denture de la butée étant écartée de la denture de la douille dans la position désolidarisée de ladite butée, les dentures de la douille et de la butée présentant un pas identique à celui des dentures du deuxième flasque et du grain.

D'autres objets et avantages de l'invention apparaîtront à la lecture de la description qui suit de modes de réalisation particuliers de l'invention donnés à titre d'exemple non limitatif, la description étant faite en référence aux dessins annexés dans lesquels :
- les figures 1 et 2 sont des représentations schématiques, respectivement en vues latérale et arrière, d'un siège de véhicule selon un premier mode de réalisation de l'invention, le siège comprenant une assise et un dossier monté pivotant sur l'assise et présentant une position redressée réglable et une position rabattue,
- la figure 3 est représentation vue écorchée d'un mécanisme d'articulation du siège des figures 1 et 2,
- la figure 4 est une représentation en perspective d'une partie du siège des figures 1 et 2, illustrant un système de neutralisation du mécanisme d'articulation,
- la figure 5 est une représentation en perspective éclatée du système de neutralisation de la figure 4,
- les figures 6 à 9 sont des représentations en vue latérale du système de neutralisation de la figure 4 dans différentes positions successives lors du déplacement du dossier entre ses positions redressée et rabattue,
- la figure 10 est une représentation en perspective d'une partie d'un siège de véhicule selon une variante du premier mode de réalisation de l'invention, illustrant le système de neutralisation du mécanisme d'articulation,
- la figure 11 est une représentation en perspective éclatée du système de neutralisation de la figure 10,
- la figure 12 est une représentation en perspective d'une partie d'un siège de véhicule selon un deuxième mode de réalisation de l'invention, illustrant le système de neutralisation du mécanisme d'articulation,
- la figure 13 est une représentation en perspective éclatée du système de neutralisation de la figure 12,
- les figures 14 et 15 sont des représentations agrandies des détails référencés respectivement XIV et XV sur la figure 13,
- les figures 16 à 22 sont des représentations du système de neutralisation de la figure 12 dans différentes positions successives lors du déplacement du dossier entre ses positions redressée et rabattue, la figure 17 représentant le système de neutralisation en coupe selon l'orientation référencée XVII-XVII dans la position représenté sur la figure 16, la figure 19 représentant le système de neutralisation en coupe selon l'orientation référencée XIX-XIX dans la position représenté sur la figure 18.

Sur les figures, les mêmes références désignent des éléments identiques ou analogues.

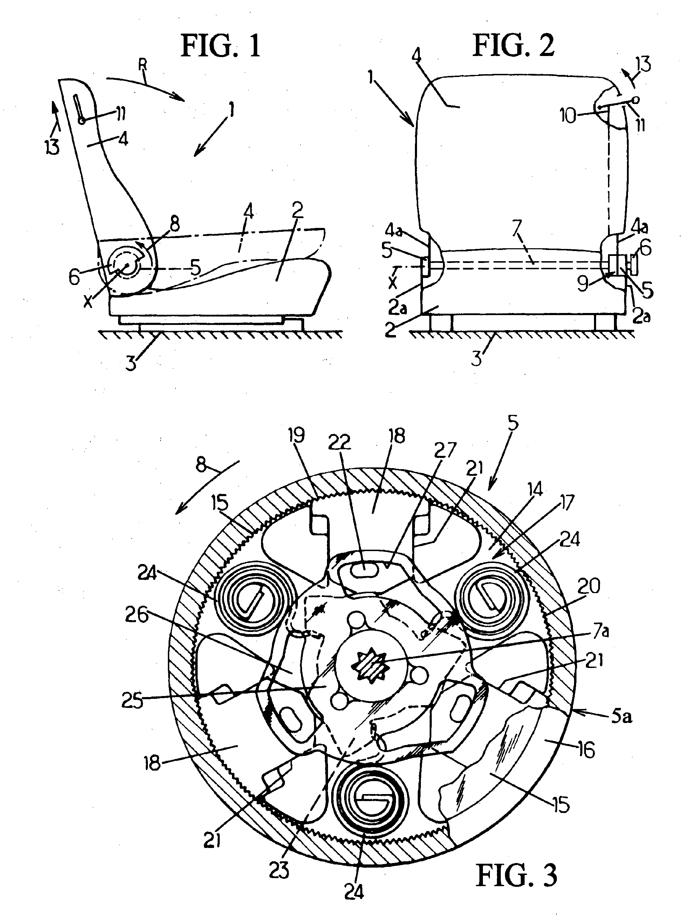

Comme représenté schématiquement sur les figures 1 et 2, l'invention concerne un siège de véhicule 1, notamment un siège avant de véhicule automobile, qui comporte, d'une part, une assise 2 montée sur un plancher 3 du véhicule, et d'autre part, un dossier 4 monté pivotant sur l'assise 2 autour d'un axe de rotation horizontal transversal X.

Plus précisément, le dossier 4 comprend deux armatures rigides 4a dont des extrémités inférieures sont reliées respectivement à deux armatures rigides 2a de l'assise, de chaque côté du siège, par deux mécanismes d'articulation 5 symétriques qui sont commandés par une même poignée 6. Cette poignée 6 est solidaire d'une barre de liaison 7 rigide qui relie l'un à l'autre les deux mécanismes d'articulation 5 et qui s'étend parallèlement à l'axe de rotation X. Éventuellement, le siège 1 pourrait comporter un mécanisme d'articulation 5 d'un seul côté du siège, auquel cas la barre de liaison 7 serait supprimée.

L'actionnement de la poignée 6 dans un sens angulaire 8 représenté sur la figure 1 permet de débloquer simultanément les deux mécanismes d'articulation 5, de façon que l'utilisateur du siège 1 puisse régler l'inclinaison du dossier 4 dans une position redressée (représentée en traits pleins sur la figure 1) en agissant directement sur ce dossier 4, le dossier étant généralement sollicité vers l'avant par au moins un ressort (non représenté).

De plus, l'un des deux mécanismes d'articulation 5 est associé à un système de neutralisation 9 qui est relié, par l'intermédiaire d'un câble 10 ou autre liaison mécanique (par exemple, une tringle rigide), à une manette 11 généralement montée pivotante sur le dossier 4. Cette manette 11 peut éventuellement être sollicitée vers une position basse de repos par un ressort (non représenté), et elle peut être déplacée vers le haut par un utilisateur, dans le sens de la flèche 13.

Lors de l'actionnement de la manette 11 dans le sens de la flèche 13, comme il sera expliqué ci-après, les deux mécanismes d'articulation 5 sont débloqués en permettant le basculement du dossier 4 au maximum vers l'avant dans le sens de la flèche R, jusqu'à une position rabattue (représentée en traits mixtes sur la figure 1). Au cours de ce mouvement, le système de neutralisation 9 maintient alors les mécanismes d'articulation 5 dans leur position déverrouillée même après lâcher de la manette 11, tant que le dossier 4 ne passe pas dans une position déterminée lorsque le dossier est déplacé dans un sens de redressement depuis sa position rabattue vers la position redressée, comme il sera expliqué ci-après.

Comme représenté sur la figure 3, chacun des deux mécanismes d'articulation 5 comporte un boîtier 5a qui comporte :
- un premier flasque 14, fixe, qui s'étend perpendiculairement à l'axe de rotation X et qui est solidarisé avec l'armature rigide 2a de l'assise 2, le flasque fixe 14 présentant des surfaces latérales intérieure et extérieure opposées, sensiblement perpendiculaires à l'axe de rotation X,
- un deuxième flasque 15, mobile, qui s'étend perpendiculairement à l'axe de rotation X et qui est solidarisé avec l'armature 4a du dossier 4, le flasque mobile 15 étant monté pivotant autour de l'axe de rotation X sur le flasque fixe 14 et présentant des surfaces latérales intérieure et extérieure opposées, sensiblement perpendiculaires à l'axe de rotation X,
- une couronne 16 qui est sertie sur le pourtour des flasques fixe 14 et mobile 15.

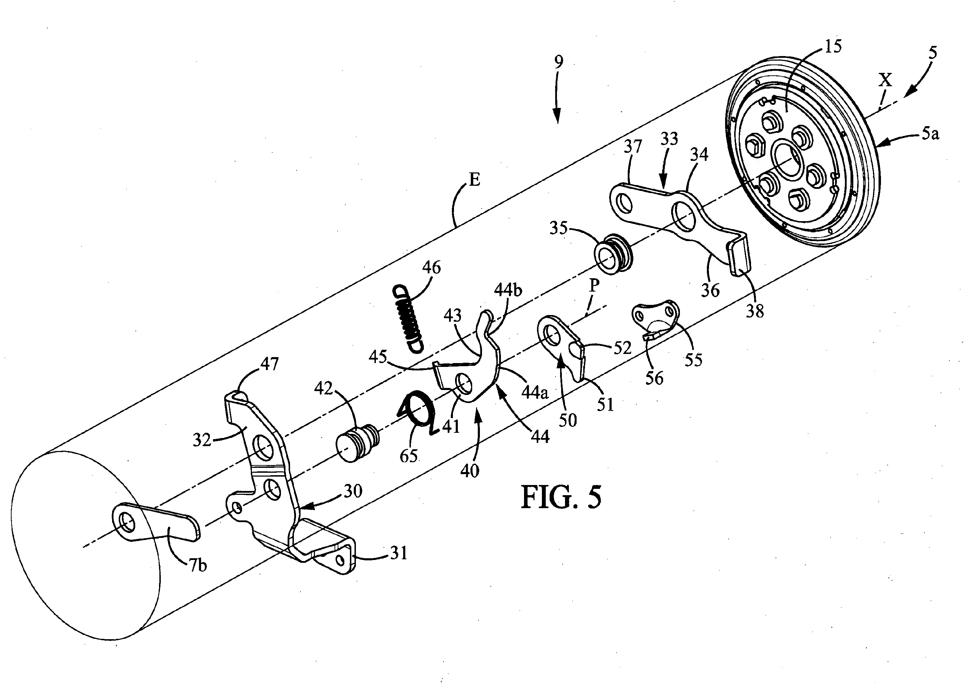

Le boîtier 5a présente un encombrement radial, mesuré perpendiculairement à l'axe de rotation X, défini par une enveloppe E cylindrique s'étendant selon l'axe de rotation X et passant par un bord périphérique extérieur porté par la couronne 16. L'enveloppe E est matérialisée en trait fin sur la figure 5. Selon cet exemple particulier de réalisation, l'enveloppe E est virtuelle, en ce sens qu'elle n'est pas matérialisée par un élément physique mais est définie par une forme géométrique, en l'espèce un cylindre. Elle vise à fournir une visualisation de l'encombrement radial du boîtier 5a. Le boîtier 5a délimite, par ailleurs, un logement entre les surfaces intérieures en regard des flasques fixe 14 et mobile 15.

Le mécanisme d'articulation 5 comprend également un système de verrouillage 17 placé dans le logement du boîtier 5a.

Dans le mode de réalisation représenté, le système de verrouillage 17 comprend trois grains 18, qui sont disposés à 120° les uns des autres et qui présentent chacun une denture extérieure 19 adaptée pour venir en prise avec une denture intérieure 20, circulaire, portée par le flasque mobile 15. Chacun de ces grains 18 est monté coulissant selon une direction radiale par rapport à l'axe de rotation X, dans un guide 21 qui est solidaire du flasque fixe 14. Les grains 18 sont alors déplaçables entre, d'une part, une position d'engagement dans laquelle leurs dentures extérieures 19 sont en prise avec la denture intérieure 20 du flasque mobile 14 pour bloquer le mécanisme d'articulation 5, et d'autre part, une position effacée dans laquelle leurs dentures extérieures 19 ne coopèrent pas avec la denture intérieure 20 du flasque mobile 14. Chaque grain 18 comporte en outre un pion 22 qui fait saillie axialement vers le flasque mobile 15.

Le système de verrouillage 17 comprend également des ressorts 24 qui sont montés sur le flasque fixe 14 et qui sollicitent une came 23, ou autre organe de manoeuvre, vers une position de repos dans laquelle elle place les grains 18 dans leur position d'engagement. La came 23 peut pivoter dans la direction angulaire 8 en permettant aux grains 18 de coulisser vers leur position effacée, débloquant ainsi le mécanisme d'articulation 5. Une plaquette 25, rigide, est liée rigidement à la came 23 et s'étend radialement entre la came 23 et le flasque mobile 15 en recouvrant partiellement les grains 18. La plaquette 25 comporte trois découpes 26 dans lesquelles sont engagés les pions 22 des grains 18, chacun de ces pions 22 coopérant avec un bord de came 27 qui délimite la découpe 26 correspondante radialement vers l'extérieur et qui est conformé pour déplacer le grain correspondant radialement vers l'intérieur lorsque la came 23 tourne dans la sens angulaire 8.

Le mécanisme d'articulation 5 comporte en outre un organe de commande comprenant un arbre de commande 7a pourvu de cannelures, solidaire de la barre de liaison 7 et emmanché dans la came 23. L'arbre de commande 7a est relié à la poignée 6 de manière à pouvoir être actionné par un utilisateur.

L'arbre de commande 7a est sollicité par les ressorts 24 vers une position de repos dans laquelle les cames 23 des systèmes de verrouillage 17 des deux mécanismes d'articulation 5 se trouvent dans leurs positions de repos, les grains 18 des systèmes de verrouillage 17 des deux mécanismes d'articulation 5 se trouvant simultanément dans leurs positions d'engagement. Le système de verrouillage 17 est alors dans un état verrouillé interdisant un pivotement du flasque mobile 15 par rapport au flasque fixe 14. Lorsque la poignée 6 est actionnée dans le sens angulaire 8, l'arbre de commande 7a et la barre de liaison 7 sont déplacés vers une position d'actionnement et les cames 23 des systèmes de verrouillage 17 des deux mécanismes d'articulation 5 pivotent simultanément pour mettre les grains 18 des systèmes de verrouillage 17 des deux mécanismes d'articulation 5 simultanément dans leurs positions effacées. Le système de verrouillage est alors dans un état déverrouillé autorisant pivotement du flasque mobile 15 par rapport au flasque fixe 14.

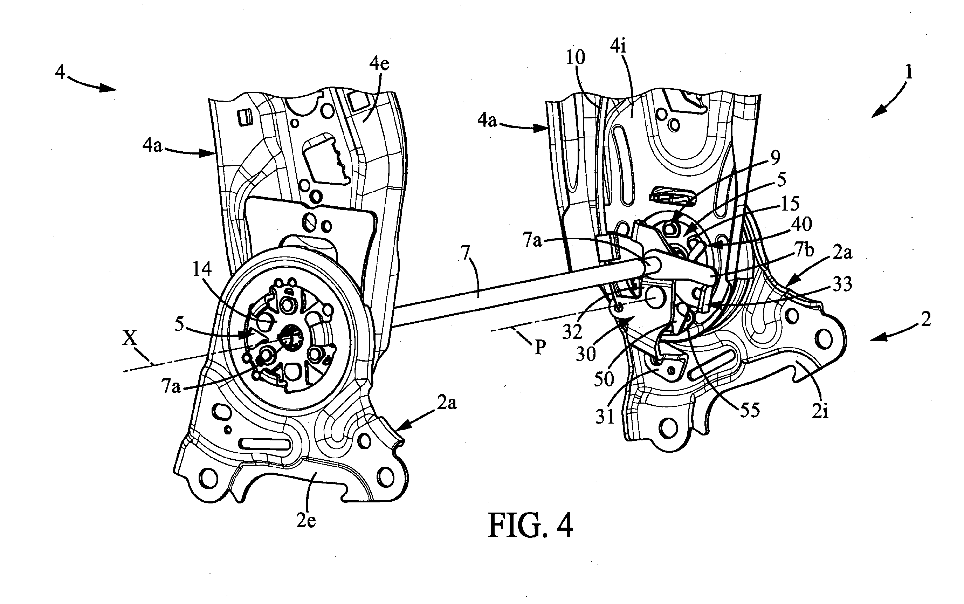

Comme représenté plus en détails sur la figure 4, chacune des armatures 2a de l'assise 2 présente deux surfaces latérales, l'une intérieure 2i et l'autre extérieure 2e, opposées et sensiblement perpendiculaires à l'axe de rotation X, les surfaces latérales intérieures 2i des armatures 2a de l'assise 2 étant placées en regard l'une de l'autre. De la même manière, chacune des armatures 4a du dossier 4 présente deux surfaces latérales, l'une intérieure 4i et l'autre extérieure 4e, opposées et sensiblement perpendiculaires à l'axe de rotation X. Les surfaces latérales intérieures 4i des armatures 4a du dossier 4 sont placées en regard l'une de l'autre et les surfaces latérales extérieures 4e des armatures 4a du dossier 4 sont placées respectivement en regard des surfaces latérales intérieures 2i des armatures 2a de l'assise 2.

Le système de neutralisation 9 évoqué précédemment constitue un mécanisme disposé à l'extérieur du boîtier 5a du mécanisme d'articulation 5 permettant de déplacer le dossier 4 entre ses positions redressée et rabattue, en maintenant les systèmes de verrouillage 17 des mécanismes d'articulation 5 dans leur état déverrouillé.

Dans un premier mode de réalisation représenté sur les figures 4 à 9, le système de neutralisation 9 est intérieur, c'est-à-dire placé du côté de la surface latérale intérieure 4i de l'une des armatures 4a du dossier 4.

Pour ce faire, sur l'un des côté du siège 1, l'assise 2 comporte une bride 30 disposées en regard de la surface latérale intérieure 4i de l'armature 4a du dossier 4. En particulier, la bride 30 comprend une partie de fixation 31 solidarisée, par soudage, vissage ou tout autre moyen approprié, à la surface latérale intérieure 2i de l'armature 2a de l'assise 2, sous l'extrémité de l'armature 4a du dossier 4. La bride 30 comprend également une partie de support 32 écartée de la partie de fixation 31 selon l'axe de rotation X et s'étendant en regard de la surface latérale intérieure 4i de l'armature 4a du dossier 4. La partie de support 32 de la bride 30 se trouve ainsi en regard de la surface latérale extérieure du flasque mobile 15. Le système de neutralisation 9 peut alors être monté dans un espace ménagé entre la partie de support 32 de la bride 30 et la surface latérale intérieure 4i de l'armature 4a du dossier 4, en regard de la surface latérale extérieure du flasque mobile 15.

Comme représenté sur les figures 4 et 5, outre l'arbre de commande 7a, l'organe de commande comprend un levier de commande 7b solidaire en rotation de l'arbre de commande 7a et s'étendant radialement par rapport à l'axe de rotation X. Le levier de commande 7b est, par exemple, disposé de l'autre côté de la partie de support 32 de la bride 30 par rapport à l'espace recevant le système de neutralisation 9.

Le système de neutralisation 9 comporte un organe de neutralisation se présentant, dans le mode de réalisation représenté, sous la forme d'un levier de neutralisation 33.

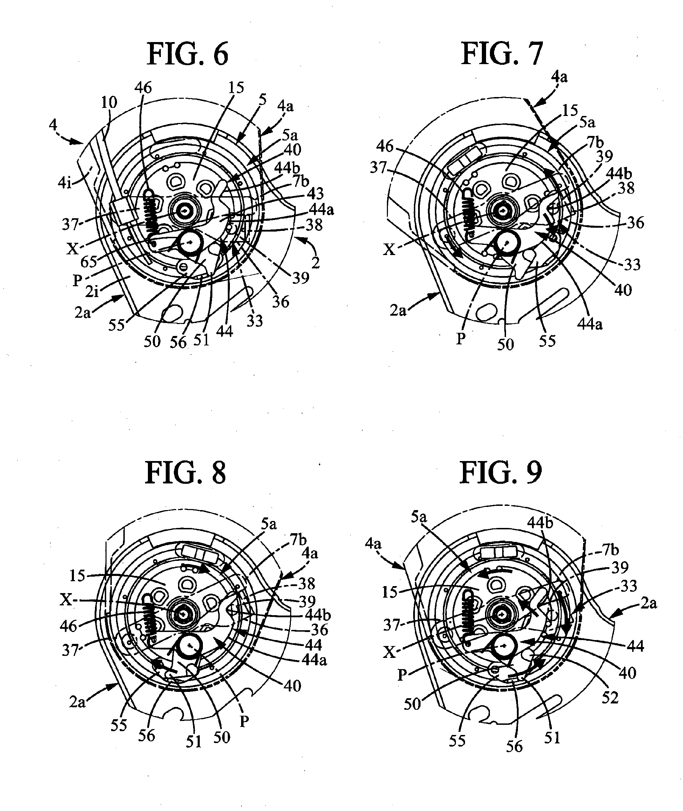

Le levier de neutralisation 33 comprend un moyeu central 34 monté pivotant autour de l'axe de rotation X, par exemple par l'intermédiaire d'un palier 35. Le levier de neutralisation 33 comprend également des premier 36 et deuxième 37 bras s'étendant depuis le moyeu central 34 sensiblement radialement par rapport à l'axe de rotation X dans deux directions opposées. Le premier bras 36 est doté d'un doigt 38 s'étendant selon l'axe de rotation X à l'opposé de la surface latérale intérieure 4i de l'armature 4a du dossier 4 de manière à pouvoir coopérer avec le levier de commande 7b. Le premier bras 36 comprend également un premier élément de couplage réalisé sous la forme d'un pion 39 (visible par transparence sur les figures 6 à 9) saillant par rapport à une surface latérale perpendiculaire à l'axe de rotation X, en regard de la surface latérale intérieure 4i de l'armature 4a du dossier 4. Le deuxième bras 37 est relié à la manette 11 par l'intermédiaire du câble 10 de telle manière que l'utilisateur puisse actionner le levier de neutralisation 33.

Comme il ressort des figures 5 à 9, les premier 36 et deuxième 37 bras présentent une dimension maximale mesurée perpendiculairement à l'axe de rotation X inférieure à une dimension maximale mesurée perpendiculairement à l'axe de rotation X du bord extérieur du boîtier 5a du mécanisme d'articulation 5. Le levier de neutralisation 33 est ainsi intégralement contenu dans l'enveloppe E définissant l'encombrement radial du boîtier 5a. En variante, les premier 36 et deuxième 37 bras pourraient présenter une dimension maximale sensiblement égale ou supérieure à celle du bord extérieur du boîtier 5a de telle sorte qu'une partie essentielle du levier de neutralisation 33, c'est à-dire plus de 50%, de préférence plus de 75%, notamment plus de 90% du levier de neutralisation 33 soit contenue dans l'enveloppe E définissant l'encombrement radial du boîtier 5a.

Le système de neutralisation 9 comporte également un organe de maintien se présentant, dans le mode de réalisation représenté, sous la forme d'un levier de maintien 40.

Le levier de maintien 40 comprend un moyeu 41 monté pivotant, par exemple par l'intermédiaire d'un palier 42, sur la partie de support 32 de la bride 30 autour d'un axe de pivotement P parallèle à l'axe de rotation X et situé en dessous de l'axe de rotation X. Le levier de maintien 40 comprend également un bras de blocage 43 s'étendant depuis le moyeu 41 en présentant une courbure telle que le bras de blocage s'étend à une distance sensiblement constante par rapport à l'axe de rotation X, égale à la distance entre l'axe de rotation X et l'axe de pivotement P. Le bras de blocage 43 comprend un deuxième élément de couplage réalisé sur un bord inférieur sous la forme d'une surface de guidage 44. La surface de guidage 44 présente une portion de came 44a sensiblement circulaire agencée au voisinage du moyeu 41, et une portion d'accrochage 44b agencée à distance du moyeu 41 et présentant une concavité dirigée à l'opposé de l'axe de rotation X. A l'opposé du bras de blocage 43, le levier de maintien 40 comprend une patte de rappel 45 s'étendant sensiblement radialement par rapport à l'axe de pivotement P. La patte de rappel 45 est raccordée par un ressort de traction 46 à un retour 47 formé sur la partie de support 32 de la bride 30, s'étendant selon l'axe de rotation X en direction de la surface latérale intérieure 4i de l'armature 4a du dossier 4.

Comme il ressort des figures 5 à 9, l'axe de pivotement P est situé à l'intérieur de l'enveloppe E définissant l'encombrement radial du boîtier 5a du mécanisme d'articulation 5 et le levier de maintien 40 présente des dimensions telles que, comme pour le levier de neutralisation 33, l'intégralité ou au moins une partie essentielle, supérieure à 50%, de préférence supérieure à 75%, notamment supérieure à 90%, du levier de maintien 40 soit contenue dans l'enveloppe E définissant l'encombrement radial du boîtier 5a.

Le système de neutralisation 9 comporte en outre une patte 50 montée pivotante autour de l'axe de pivotement P et s'étendant sensiblement radialement par rapport à l'axe de pivotement P jusqu'à une extrémité libre pourvue d'une protubérance 51. Sur une surface latérale opposée à la surface latérale intérieure 4i de l'armature 4a du dossier 4, la patte 50 présente une saillie 52 s'étendant selon l'axe de pivotement P.

Le système de neutralisation 9 comporte en outre une butée 55 déplaçable conjointement avec le dossier selon une course. Dans le premier mode de réalisation, la butée 55 est fixée sur la surface latérale intérieure 4i de l'armature 4a du dossier 4 de telle manière que la protubérance 51 de la patte 50 s'étende dans la course de la butée 55. Dans le premier mode de réalisation représenté, la butée 55 est placée au voisinage du bord de l'extrémité de l'armature 4a. La butée 55 comporte un doigt 56 s'étendant selon l'axe de rotation X à l'opposé de la surface latérale intérieure 4i de l'armature 4a du dossier 4 de manière à pouvoir coopérer avec la protubérance 51 de la patte 50.

Comme il ressort des figures 5 à 9, la patte 50 et la butée 55 sont dimensionnées et agencées de telle manière que l'intégralité ou au moins des parties essentielles, supérieure à 50%, de préférence supérieure à 75%, notamment supérieure à 90%, de la patte 50 et de la butée 55 soient contenues dans l'enveloppe E définissant l'encombrement radial du boîtier 5a.

Le système de neutralisation 9 assemblé dans un état de repos est représenté sur la figure 6.

Dans la position de repos de l'arbre de commande 7a, correspondant également à la position de repos du levier de commande 7b, le levier de commande 7b s'étend sensiblement horizontalement. Le levier de neutralisation 33 s'étend également sensiblement horizontalement de telle manière que le levier de commande 7b repose sur le doigt 38 du premier bras 36. Le levier de maintien 40, interposé entre le levier de neutralisation 33 et la surface latérale intérieure 4i de l'armature 4a du dossier 4, est sollicité par le ressort de traction 46 dans une position escamotée dans laquelle la portion de came 44a de la surface de guidage 44 est maintenue en contact avec le pion 39 du premier bras 36 du levier de neutralisation 33. La patte 50 est interposée entre le levier de maintien 40 et la surface latérale intérieure 4i de l'armature 4a du dossier 4. La patte 50 est associée, dans le premier mode de réalisation, au levier de maintien 40 par l'intermédiaire d'un ressort de torsion 65 sollicitant la patte 50 vers une position rapprochée dans laquelle la saillie 52 est en contact avec le bord inférieur du levier de maintien 40, dans une portion rectiligne située sensiblement entre le moyeu 41 et la portion de came 44a. La protubérance 51 de la patte 50 s'étend dans la course du doigt 56 de la butée 55.

Dans cette position, les systèmes de verrouillage 17 des mécanismes d'articulation 5 sont dans leur état verrouillé. Le levier de neutralisation 33 est alors dans une position inactive autorisant un déplacement du levier de commande 7b et de l'arbre de commande 7a entre leurs positions de repos et d'actionnement. Ainsi, lorsque l'utilisateur tourne la poignée 6 dans le sens angulaire 8, l'arbre de commande 7a et le levier de commande 7b peuvent pivoter de leur position de repos vers leur position d'actionnement de manière à faire passer les systèmes de verrouillage 17 des mécanismes d'articulation 5 dans leur état déverrouillé, permettant le réglage de la position redressée du dossier 4 comme expliqué précédemment. Ce faisant, le levier de neutralisation 33 reste en position inactive.

Lors du réglage, le doigt 56 de la butée 55 peut venir en contact avec la protubérance 51 de la patte 50 :
- soit dans le sens antihoraire correspondant au sens de redressement du dossier 4, auquel cas la butée 55 écarte le levier de maintien 40 du pion 39 du levier de neutralisation 33 par l'intermédiaire de la patte 50,
- soit dans le sens horaire correspondant à un sens de rabattement du dossier 4, auquel cas la butée 55 déplace la patte 50 vers une position écartée à distance du levier de maintien 40 sans déplacer le levier de maintien 40.

Dans un cas comme dans l'autre, le déplacement de la butée 55 est sans conséquence pour l'état des systèmes de verrouillage 17 des mécanismes d'articulation 5.

Sur la figure 7, lorsque l'utilisateur veut faire basculer le dossier 4 dans le sens de rabattement depuis la position redressée vers la position rabattue, il actionne la manette 11. Ce faisant, le câble 10 fait pivoter le levier de neutralisation 33 dans le sens antihoraire vers une position active. Le levier de commande 7b est déplacé dans le sens antihoraire conjointement au levier de neutralisation 33 par l'intermédiaire du doigt 38 du premier bras 36, jusqu'à sa position d'actionnement. Les systèmes de verrouillage 17 des mécanismes d'articulation passent dans leur état déverrouillé.

Au cours du déplacement du levier de neutralisation 33, le pion 39 du premier bras 36 se déplace le long de la portion de came 44a de la surface de guidage 44 du levier de maintien 40. Le pion 39 atteint la portion d'accrochage 44b lorsque le levier de neutralisation 33 est dans la position active. Le levier de maintien 40 bascule alors dans le sens horaire pour maintenir le pion 39 dans la concavité de la portion d'accrochage 44b. Le levier de maintien 40 se trouve alors dans une position de maintien dans laquelle il maintient le levier de neutralisation 33 dans la position active. Les systèmes de verrouillage 17 des mécanismes d'articulation sont alors maintenus dans leur état déverrouillé permettant de rabattre le dossier 4.

Comme il ressort de ce qui précède, le pion 39 et la surface de guidage 44 du levier de maintien 40 constituent un dispositif de couplage adapté pour déplacer le levier de maintien 40 de la position escamotée à la position de maintien lorsque le levier de neutralisation 33 est déplacé depuis la position inactive vers la position active.

Sur la figure 8, lorsque le dossier 4 est pivoté dans le sens de rabattement depuis la position redressée vers la position rabattue, la patte 50 peut être écartée du levier de maintien 40 par la butée 55 avant de revenir au contact du levier de maintien 40.

Sur la figure 9, lors du pivotement du dossier 4 dans le sens de redressement depuis la position rabattue vers la position redressée, lorsque, dans une position déterminée du dossier 4 définie par la position relative de la butée 55 et de la protubérance 51 de la patte 50, la protubérance 51 interfère avec le doigt 56 de la butée 55, la butée 55 déplace la patte 50 en contact avec le levier de maintien 40 par l'intermédiaire de la saillie 52 dans le sens antihoraire. La portion d'accrochage 44b du levier de maintien 40 est écartée de la position de maintien, libérant ainsi le pion 39 du levier de neutralisation 33. Sous l'effet des ressorts 24 des systèmes de verrouillage 17 des mécanismes d'articulation 5, les systèmes de verrouillage 17 retournent à leur état verrouillé, le levier de neutralisation 33 retourne à sa position inactive et le levier de commande 7b retourne à sa position de repos. Le levier de maintien 40 en appui sur le pion 39 du levier de neutralisation retourne à sa position escamotée.

Comme il ressort de ce qui précède, la patte 50 et la butée 55 forment un dispositif de libération du système de neutralisation 9 adapté pour déplacer le levier de maintien 40 de la position de maintien à la position escamotée dans la position déterminée du dossier 4 lors du pivotement du dossier dans le sens de redressement.

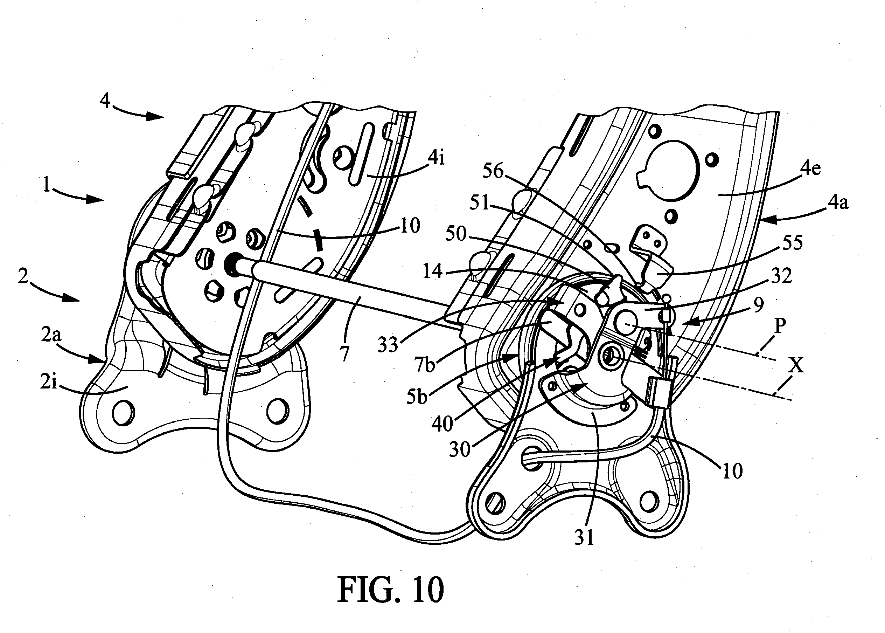

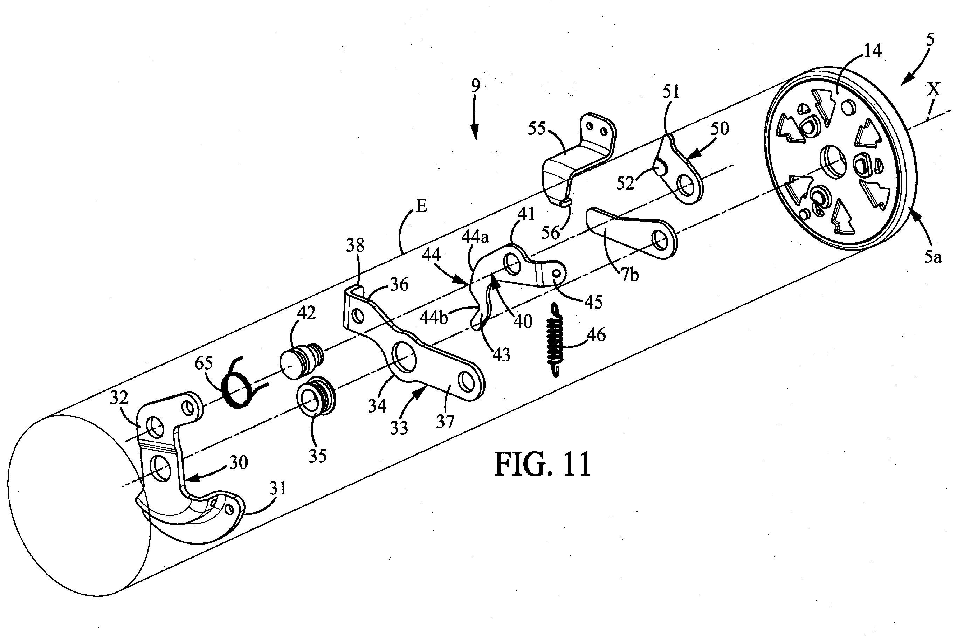

Dans une variante représentée sur les figures 10 et 11, le système de neutralisation 9 est extérieur, c'est-à-dire placé du côté de la surface latérale extérieure 4e de l'une des armatures 4a du dossier 4.

La partie de fixation 31 de la bride 30 est alors solidarisée à la surface latérale extérieure 2e de l'armature 2a de l'assise 2 et la partie de support 32 de la bride 30 s'étend en regard de la surface latérale extérieure 2e de l'armature 2a de l'assise 2. La partie de support 32 de la bride 30 se trouve ainsi en regard de la surface latérale extérieure du flasque fixe 14 et le système de neutralisation 9 peut être monté dans un espace ménagé entre la partie de support 32 de la bride 30 et la surface latérale extérieure 2e de l'armature 2a de l'assise 2, en regard de la surface latérale extérieure du flasque fixe 14.

Sur la figure 10, le système de neutralisation 9 est obtenu par une symétrie selon un plan perpendiculaire à l'axe de rotation X combinée à une rotation à 180°. La structure générale et le fonctionnement du système de neutralisation 9 restent néanmoins inchangés de sorte que la description qui en a déjà était faite précédemment est directement transposable à cette variante.

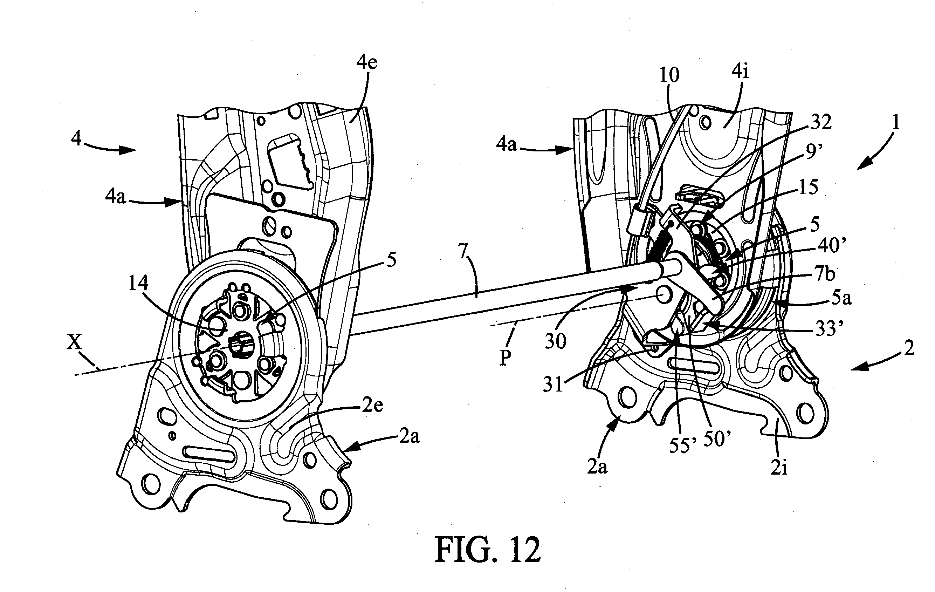

Les figures 12 à 22 illustrent un deuxième mode de réalisation du siège de véhicule. Le deuxième mode de réalisation est décrit en relation avec un système de neutralisation 9' intérieur, étant entendu que la description sera directement transposable à un système de neutralisation 9' extérieur.

Comme pour le premier mode de réalisation, les composants du système de neutralisation 9' sont adaptés pour être contenus dans l'encombrement radial du boîtier 5a du mécanisme d'articulation 5.

Le deuxième mode de réalisation diffère, toutefois, du premier mode de réalisation décrit précédemment principalement en ce que le système de neutralisation 9' comprend un dispositif de mémorisation de la position redressée du dossier 4 réglée par l'utilisateur. De cette manière, après que l'utilisateur a rabattu le dossier 4 pour permettre l'accès à des places arrières ou à un espace arrière situé derrière le siège 1, il peut redresser le dossier 4 et retrouver la position redressée réglée préalablement au rabattement.

Pour ce faire, comme représenté sur les figures 12 à 16, à la différence du système de neutralisation 9 décrit précédemment, la patte 50' du dispositif de libération est solidaire du levier de maintien 40', dont les autres parties fonctionnelles restent inchangées. Ainsi, la patte 50' s'étend radialement par rapport à l'axe de pivotement P depuis le bord inférieur de levier de maintien 40', entre le moyeu 41 et la portion de came 44a de la surface de guidage 44.

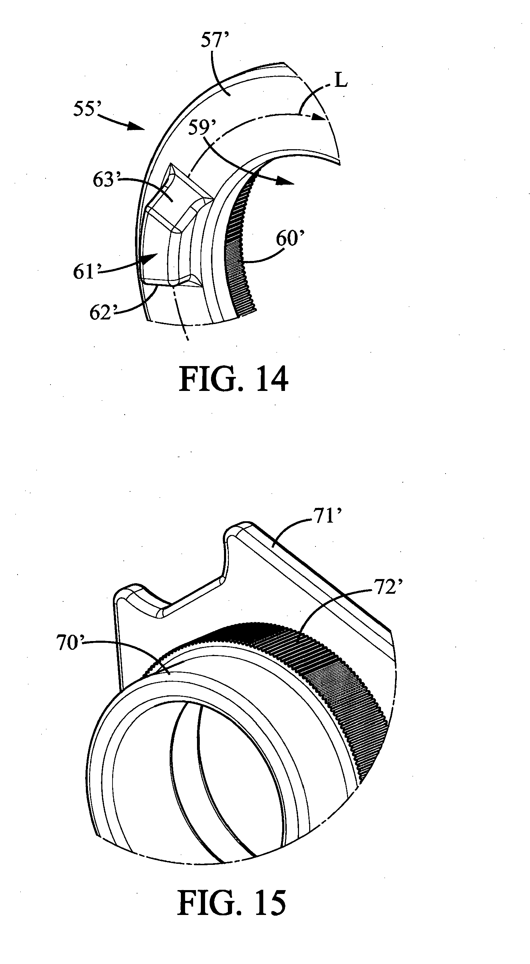

Par ailleurs, la butée 55' du dispositif de libération comprend une partie annulaire 57' montée pivotante autour de l'axe de rotation X et un bras 58' s'étendant radialement par rapport à l'axe de rotation X jusqu'à une extrémité pourvue d'un doigt 56' s'étendant selon l'axe de rotation X à l'opposé de la surface latérale intérieure 4i de l'armature 4a du dossier 4 de manière à pouvoir coopérer avec la patte 50'. Comme représenté plus en détail sur la figure 14, la partie annulaire 57' de la butée 55' comprend un alésage 59' pourvu d'une denture intérieure 60'. En outre, sur une surface latérale perpendiculaire à l'axe de rotation X et placée en regard du moyeu 34' du levier de neutralisation 33', la partie annulaire 57' comporte deux rampes 61' saillantes diamétralement opposées. Chaque rampe 61' s'étend selon une même direction circonférentielle L entre une surface de butée 62' perpendiculaire à la surface latérale de la partie annulaire 57', et une surface de guidage 63' inclinée par rapport à la surface latérale de la partie annulaire 57'. Le moyeu 34' du levier de neutralisation 33' comprend des ouvertures 64' correspondantes adaptées pour recevoir les rampes 61'.

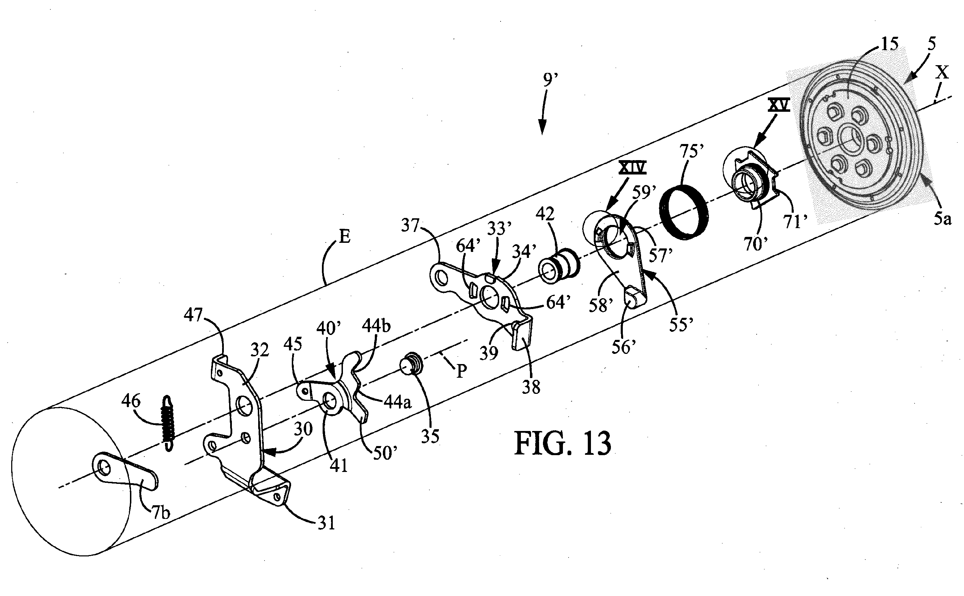

Sur les figures 13 et 15, le dispositif de libération comprend en outre une douille 70' s'étendant selon l'axe de rotation X depuis un flasque 71' solidarisé au flasque mobile 15. La douille 70' est adaptée pour être reçue dans la partie annulaire 57' de la butée 50' et présente une surface extérieure pourvue d'une denture extérieure 72' adaptée pour coopérer la denture intérieure 60' de la butée 55'. Les dentures 60', 72' de la douille 70' et de la butée 55' présentent un pas identique à celui des dentures 19, 20 du flasque mobile 15 et des grains 18.

Les autres composants du système de neutralisation 9 sont sensiblement analogues à ceux du système de neutralisation 9 précédemment décrit et l'on se réfèrera à la description qui en a déjà été faite pour plus de détails.

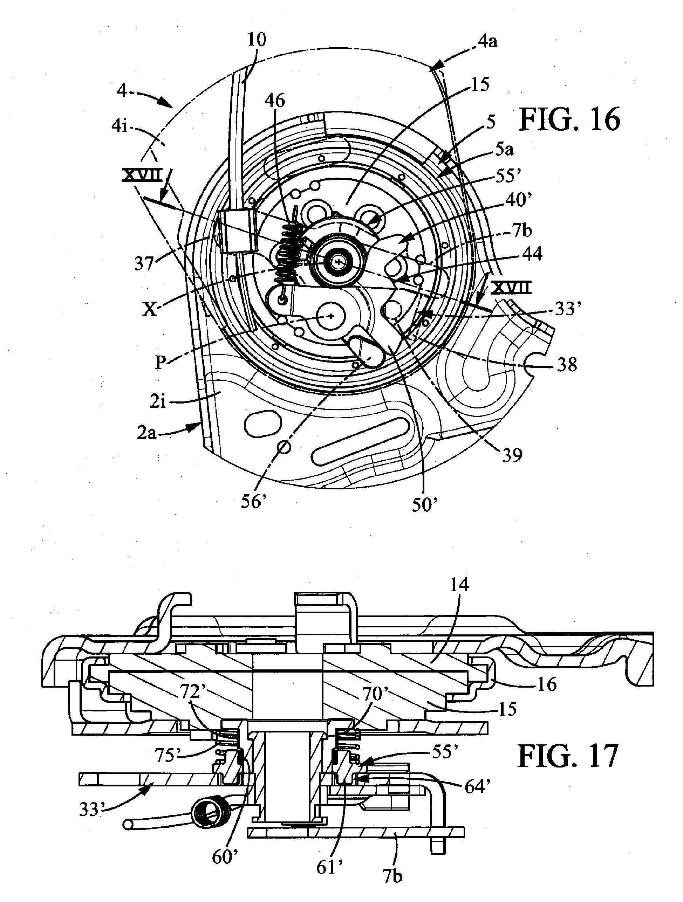

Le système de neutralisation 9' assemblé dans un état de repos est représenté sur les figures 16, 17.

Dans cet état, comme expliqué précédemment, le levier de neutralisation 33 est dans sa position inactive, le levier de commande 7b reposant sur le doigt 38 du premier bras 36 et pouvant librement être déplacé vers la position d'actionnement pour permettre un réglage de la position redressée du dossier 4. Le levier de maintien 40' est sollicité par le ressort de traction 46 dans la position escamotée, la portion de came 44a de la surface de guidage 44 étant maintenue en contact avec le pion 39 du premier bras 36 du levier de neutralisation 33'.

Comme représenté sur la figure 17, la butée 55' est sollicitée par un ressort de compression 75' vers une position désolidarisée dans laquelle la butée est écartée de la douille 70' de manière à être immobile par rapport au dossier 4. Dans cette position, les rampes 61' de la butée 55' sont disposées respectivement dans les ouvertures 64' du moyeu central 34' du levier de neutralisation 33' en position inactive. La denture intérieure 60' de la butée 55' est alors écartée de la denture extérieure 72' de la douille 70'.

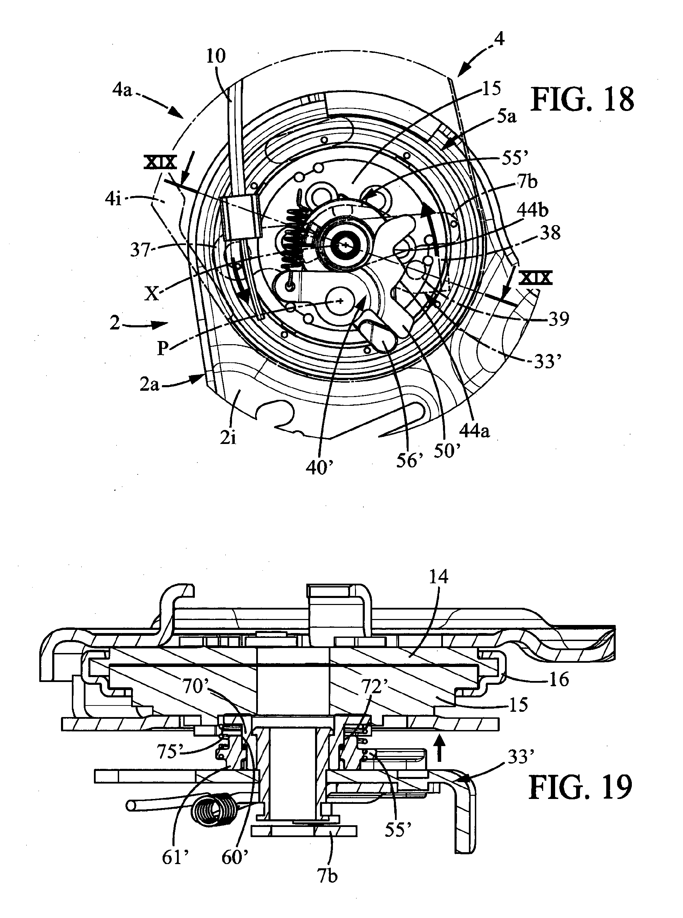

Sur les figures 18 et 19, lorsque l'utilisateur veut faire basculer le dossier 4 dans le sens de rabattement depuis la position redressée vers la position rabattue, il actionne la manette 11. Ce faisant, le câble 10 fait pivoter le levier de neutralisation 33 vers la position active, le levier de commande 7b étant déplacé vers sa position d'actionnement.

Au cours de ce même mouvement, les surfaces de guidage 62' des rampes 61' de la butée 55' vont glisser sur les bords des ouvertures 64' du moyeu central 34' du levier de neutralisation 33' pour en sortir et permettre aux rampes 61' de reposer sur la surface latérale du levier de neutralisation 33' en regard du flasque mobile 15. La butée 55' peut ainsi être déplacée vers la douille 70' pour atteindre une position solidarisée dans laquelle la denture intérieure 60' de la butée 55' est en prise avec la denture extérieure 72' de la douille 70'. La butée 55' se trouve ainsi solidarisée au dossier 4 dans une position relative par rapport à la patte 50' correspondant à la position redressée réglée du dossier 4.

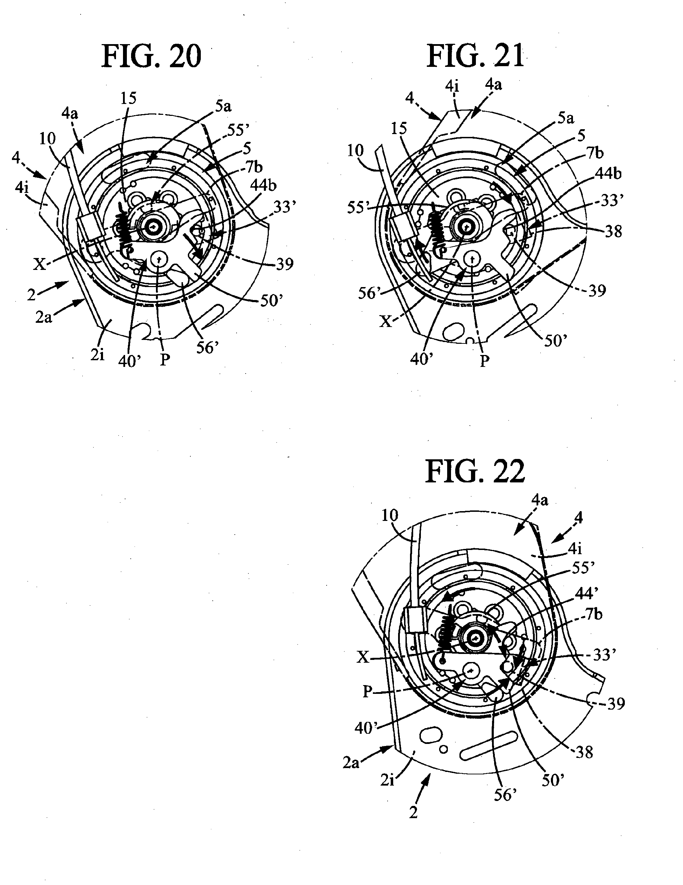

Sur la figure 20, comme expliqué précédemment, au cours du déplacement du levier de neutralisation 33', le levier de maintien 40' bascule dans la position de maintien pour maintenir le levier de neutralisation 33' dans la position active.

Sur la figure 21, lorsque le dossier 4 est pivoté dans le sens de rabattement depuis la position redressée vers la position rabattue, le doigt 56' de la butée 55' est écarté de la patte 50' du levier de maintien 40'.

Sur la figure 22, lors du pivotement du dossier 4 dans le sens de redressement depuis la position rabattue vers la position redressée, lorsque, dans la position redressée du dossier 4 réglée préalablement au rabattement, la patte 50' du levier de maintien 40' interfère avec le doigt 56' de la butée 55', la butée 55' déplace la patte 50' et le levier de maintien 40' de manière à libérer le pion 39 du levier de neutralisation 33'. Sous l'effet des ressorts 24 des systèmes de verrouillage 17 des mécanismes d'articulation 5, les systèmes de verrouillage 17 retournent à leur état verrouillé, le levier de neutralisation 33' retourne à sa position inactive et le levier de commande 7b retourne à sa position de repos. Le levier de maintien 40 en appui sur le pion 39 du levier de neutralisation retourne à sa position escamotée. La butée 55' retourne, quant à elle, à sa position désolidarisée.

## Revendications

1. Siège de véhicule (1) comprenant :
- une assise (2) et un dossier (4) monté pivotant sur l'assise (2) autour d'un axe de rotation (X), le dossier (4) présentant une position redressée réglable et une position rabattue,
- au moins un mécanisme d'articulation (5) adapté pour régler la position redressée du dossier (4), le mécanisme d'articulation (5) comportant un boîtier (5a) délimitant un logement, un système de verrouillage (17) placé dans le logement du boîtier (5a) et un organe de commande (7a) actionnable par un utilisateur, le boîtier (5a) présentant un bord périphérique extérieur (16) et un encombrement radial défini par une enveloppe (E) cylindrique qui s'étend selon l'axe de rotation (X) et qui passe par le bord extérieur (16) dudit boîtier (5a), le boîtier (5a) comportant un premier flasque (14) solidaire de l'assise (2) et un deuxième flasque (15) solidaire du dossier (4), le deuxième flasque (15) étant monté pivotant autour de l'axe de rotation (X) sur le premier flasque (14), le système de verrouillage (17) étant adapté pour présenter un état verrouillé dans lequel ledit système de verrouillage (17) interdit un pivotement du deuxième flasque (15) par rapport au premier flasque (14), et un état déverrouillé dans lequel ledit système de verrouillage (17) autorise ledit pivotement, l'organe de commande (7a) présentant une position de repos vers laquelle ledit organe de commande (7a) est sollicité, et étant déplaçable vers une position d'actionnement, l'organe de commande (7a) étant relié au système de verrouillage (17) de telle manière que, dans la position de repos dudit organe de commande (7a), le système de verrouillage (17) est dans l'état verrouillé, et dans la position d'actionnement dudit organe de commande (7a), le système de verrouillage (17) est dans l'état déverrouillé,
- un système de neutralisation (9 ; 9') adapté pour permettre de déplacer le dossier (4) entre les positions redressée et rabattue, le système de neutralisation (9 ; 9') étant disposé à l'extérieur du boîtier (5a) du mécanisme d'articulation (5), et comportant un organe de neutralisation (33 ; 33') actionnable par l'utilisateur et un organe de maintien (40 ; 40'), l'organe de neutralisation (33 ; 33') étant déplaçable entre une position inactive dans laquelle ledit organe de neutralisation (33 ; 33') autorise un déplacement de l'organe de commande (7b) entre ses positions de repos et d'actionnement, et une position active dans laquelle ledit organe de neutralisation (33 ; 33') place l'organe de commande (7b) dans la position d'actionnement, l'organe de maintien (40 ; 40') étant déplaçable par rapport à l'assise (2) entre une position de maintien dans laquelle ledit organe de maintien (40 ; 40') maintient l'organe de neutralisation (33 ; 33') dans la position active, et une position escamotée écartée de la position de maintien,
ledit siège de véhicule (1) étant **caractérisé en ce qu'**au moins une partie essentielle de l'organe de neutralisation (33 ; 33') et au moins une partie essentielle de l'organe de maintien (40 ; 40') sont contenues dans l'encombrement radial du boîtier (5a) du mécanisme d'articulation (5).

2. Siège de véhicule (1) selon la revendication 1, dans lequel chacun des premier (14) et deuxième (15) flasques présente une surface latérale extérieure opposée au logement et sensiblement perpendiculaire à l'axe de rotation (X), et l'assise (2) comporte une bride (30) s'étendant en regard de la surface latérale extérieure de l'un des flasques choisi parmi les premier (14) et deuxième (15) flasques, le système de neutralisation (9, 9') étant disposé entre la bride (30) et la surface latérale extérieure dudit flasque (14, 15).

3. Siège de véhicule (1) selon la revendication 1 ou 2, dans lequel l'organe de neutralisation (33 ; 33') est monté pivotant sur l'axe de rotation (X) et présente une dimension maximale mesurée perpendiculairement à l'axe de rotation (X) inférieure ou sensiblement égale à une dimension maximale mesurée perpendiculairement à l'axe de rotation (X) du bord extérieur (16) du boîtier (5a).

4. Siège de véhicule (1) selon l'une quelconque des revendications 1 à 3, dans lequel l'organe de maintien (40 ; 40') est monté pivotant sur l'assise (2) selon un axe de pivotement (P) parallèle à l'axe de rotation (X), ledit axe de pivotement (P) étant situé à l'intérieur de l'enveloppe (E) définissant l'encombrement radial du boîtier (5a) du mécanisme d'articulation (5).

5. Siège de véhicule (1) selon l'une quelconque des revendications 1 à 4, dans lequel le système de neutralisation (9 ; 9') comporte en outre un dispositif de couplage (39, 44) adapté pour déplacer l'organe de maintien (40 ; 40') de la position escamotée à la position de maintien lorsque l'organe de neutralisation (33 ; 33') est déplacé depuis la position inactive vers la position active.

6. Siège de véhicule (1) selon la revendication 5, dans lequel le dispositif de couplage comprend :
- deux éléments de couplage constitués l'un par un pion (39) et l'autre par une surface de guidage (44), et portés l'un par l'organe de neutralisation (33 ; 33') et l'autre par l'organe de maintien (40 ; 40'), la surface de guidage (44) présentant une portion de came (44a) et une portion d'accrochage (44b),
- un organe de sollicitation (46) adapté pour maintenir l'élément de couplage porté par l'organe de maintien (40 ; 40') contre l'élément de couplage porté par l'organe de neutralisation(33 ; 33'),
les éléments de couplage étant agencés pour que le pion (39) soit déplacé le long de la portion de came (44a) de la surface de guidage (44) lorsque l'organe de neutralisation (33 ; 33') est déplacé depuis la position inactive vers la position active, et pour que le pion (39) soit placé dans la portion d'accrochage (44b) de la surface de guidage (44) lorsque l'organe de neutralisation (33 ; 33') est dans la position active.

7. Siège de véhicule (1) selon l'une quelconque des revendications 1 à 6, dans lequel le système de neutralisation (9 ; 9') comporte en outre un dispositif de libération (50, 55 ; 50', 55') adapté pour déplacer l'organe de maintien (40 ; 40') de la position de maintien à la position escamotée dans une position déterminée du deuxième flasque (15) par rapport au premier flasque (14) lors du pivotement du dossier (4) dans un sens de redressement depuis la position rabattue vers la position redressée.

8. Siège de véhicule (1) selon la revendication 7, dans lequel une partie essentielle du dispositif de libération (50, 55 ; 50', 55') est contenue dans l'encombrement radial du boîtier (5a) du mécanisme d'articulation (5).

9. Siège de véhicule (1) selon la revendication 7 ou 8, dans lequel le dispositif de libération comprend :
- une butée (55 ; 55') déplaçable conjointement avec le dossier (4) selon une course, et
- une patte (50 ; 50') associée à l'organe de maintien (33 ; 33') et s'étendant dans la course de la butée (55 ; 55'), la patte (50 ; 50') étant adaptée pour interférer avec la butée (55 ; 55') dans la position déterminée du deuxième flasque (15) par rapport au premier flasque (14) lors du pivotement du dossier (4) dans le sens de redressement.

10. Siège de véhicule (1) selon la revendication 9, dans lequel la patte (50) est sollicitée vers une position rapprochée dans laquelle ladite patte (50) est en contact avec l'organe de maintien (40), et déplaçable vers une position écartée dans laquelle ladite patte (50) est écartée de l'organe de maintien (40) lors du pivotement du dossier (4) dans un sens de rabattement depuis la position redressée vers la position rabattue.

11. Siège de véhicule (1) selon la revendication 9 ou 10, dans lequel le dossier (4) comporte une armature (4a) présentant deux surfaces latérales (4i ; 4e) opposées sensiblement perpendiculaires à l'axe de rotation (X), l'organe de neutralisation (33 ; 33') et l'organe de maintien étant placés du côté de l'une des surfaces latérales (4i ; 4e) de l'armature (4a) du dossier (4), la butée (55) étant fixée sur ladite surface latérale (4i ; 4e).

12. Siège de véhicule (1) selon la revendication 9 ou 10, dans lequel la butée (55') est montée déplaçable par rapport au dossier (4) entre une position désolidarisée dans laquelle ladite butée (55') est immobile par rapport au dossier (4), et une position solidarisée dans laquelle ladite butée (55') est solidarisée au dossier (4), la butée (55') étant reliée à l'organe de neutralisation (33') de telle manière que, dans la position inactive dudit organe de neutralisation (33'), ladite butée (55') est dans la position désolidarisée, et dans la position active dudit organe de neutralisation (33'), ladite butée (55') est dans la position solidarisée.

13. Siège de véhicule (1) selon la revendication 12, dans lequel le dispositif de libération (50', 55') comprend en outre une douille (70') solidaire du deuxième flasque (15) et s'étendant selon l'axe de rotation (X), la butée (55') étant montée pivotante autour de l'axe de rotation (X) et étant solidarisée à la douille (70') dans la position solidarisée de ladite butée (55') et écartée de la douille (70') dans la position désolidarisée de ladite butée (55').

14. Siège de véhicule (1) selon la revendication 13, dans lequel le système de verrouillage (17) comprend une denture intérieure (20) portée par le deuxième flasque (15) et au moins un grain (18) monté déplaçable à l'intérieur du logement du boîtier (5a) selon une direction radiale par rapport à l'axe de rotation (X), le grain (18) étant pourvu d'une denture extérieure (19) adaptée pour coopérer avec la denture intérieure (20) du deuxième flasque (15), la denture extérieure (19) du grain (18) étant en prise avec la denture intérieure (20) du deuxième flasque (15) dans l'état verrouillé du système de verrouillage (17) et étant écartée de la denture intérieure (20) du deuxième flasque (15) dans l'état déverrouillé du système de verrouillage (17), la douille (70') et la butée (55') présentant respectivement des dentures, l'une intérieure (60') et l'autre extérieure (72'), adaptées pour coopérer l'une avec l'autre, la denture (60') de la butée (55') étant en prise avec la denture (72') de la douille (70') dans la position solidarisée de ladite butée (55') et la denture (60') de la butée (55') étant écartée de la denture (72') de la douille (70') dans la position désolidarisée de ladite butée (55'), les dentures (60', 72') de la douille (70') et de la butée (55') présentant un pas identique à celui des dentures (19, 20) du deuxième flasque (15) et du grain (18).

## Patentansprüche

1. Fahrzeugsitz (1) mit:
- einer Sitzfläche (2) und einer Rückenlehne (4), die auf eine um eine Drehachse (X) drehbare Weise an der Sitzfläche (2) angebracht ist, wobei die Rückenlehne (4) eine verstellbare aufgerichtete Position und eine heruntergeklappte Position einnehmen kann,
- mindestens einem Gelenkmechanismus (5) zum Verstellen der aufgerichteten Position der Rückenlehne (4), wobei der Gelenkmechanismus (5) ein eine Aufnahme begrenzendes Gehäuse (5a), ein in der Aufnahme des Gehäuses (5a) angeordnetes Verriegelungssystem (17) und ein von einem Benutzer betätigbares Steuerglied (7a) aufweist, wobei das Gehäuse (5a) einen Außenumfangsrand (16) und einen von einer zylindrischen Einhüllenden (E) definierten radialen Raum aufweist, der sich entlang der Drehachse (X) erstreckt und der durch den Außenrand (16) des Gehäuses (5a) hindurchgeht, wobei das Gehäuse (5a) eine mit der Sitzfläche (2) fest verbundene erste Wange (14) und eine mit der Rückenlehne (4) fest verbundene zweite Wange (15) aufweist, wobei die zweite Wange (15) auf eine um die Drehachse (X) schwenkbare Weise an der ersten Wange (14) angebracht ist, wobei das Verriegelungssystem (17) einen verriegelten Zustand, in welchem das Verriegelungssystem (17) ein Schwenken der zweiten Wange (15) bezüglich der ersten Wange (14) nicht zulässt, und einen entriegelten Zustand, in welchem das Verriegelungssystem (17) das Schwenken erlaubt, einnehmen kann, wobei das Steuerglied (7a) eine Ruheposition hat, zu welcher hin das Steuerglied (7a) vorgespannt ist, und in eine Betätigungsposition bewegbar ist, wobei das Steuerglied (7a) mit dem Verriegelungssystem (17) verbunden ist, derart, dass in der Ruheposition des Steuerglieds (7a) das Verriegelungssystem (17) in dem verriegelten Zustand ist, und in der Betätigungsposition des Steuerglieds (7a) das Verriegelungssystem (17) in dem entriegelten Zustand ist,
- einem Neutralisationssystem (9;9') zum Ermöglichen einer Bewegung der Rückenlehne (4) zwischen der aufgerichteten und heruntergeklappten Position, wobei das Neutralisationssystem (9;9') außerhalb des Gehäuses (5a) des Gelenkmechanismus (5) angeordnet ist und ein von dem Benutzer betätigbares Neutralisationsglied (33,33') und ein Halteglied (40;40') aufweist, wobei das Neutralisationsglied (33;33') bewegbar ist zwischen einer inaktiven Position, in welcher das Neutralisationsglied (33;33') eine Bewegung des Steuerglieds (7b) zwischen seiner Ruheposition und seiner Betätigungsposition erlaubt, und einer aktiven Position, in welcher das Neutralisationsglied (33;33') das Steuerglied (7b) in der Betätigungsposition anordnet, wobei das Halteglied (40;40') bezüglich der Sitzfläche (2) verschiebbar ist zwischen einer Halteposition, in welcher das Halteglied (40;40') das Neutralisationsglied (33;33') in der aktiven Position hält, und einer zurückgezogenen Position im Abstand von der Halteposition,
wobei der Fahrzeugsitz (1) **dadurch gekennzeichnet ist, dass** mindestens ein wesentlicher Teil des Neutralisationsglieds (33;33') und mindestens ein wesentlicher Teil des Halteglieds (40;40') in dem radialen Raum des Gehäuses (5a) des Gelenkmechanismus (5) untergebracht sind.

2. Fahrzeugsitz (1) nach Anspruch 1, wobei sowohl die erste (14) wie auch die zweite (15) Wange eine der Aufnahme zugewandte und zur Drehachse (X) im Wesentlichen orthogonale Außenseitenfläche hat und die Sitzfläche (2) einen Flansch (30) aufweist, der sich gegenüber der Außenseitenfläche einer der Wangen, ausgewählt aus der ersten (14) oder der zweiten (15) Wange, erstreckt, wobei das Neutralisationssystem (9,9') zwischen dem Flansch (30) und der Außenseitenfläche der besagten Wange (14,15) angeordnet ist.

3. Fahrzeugsitz (1) nach Anspruch 1 oder 2, wobei das Neutralisationsglied (33;33') auf eine um die Drehachse (X) drehbare Weise angebracht ist und eine maximale Abmessung, gemessen senkrecht zur Drehachse (X), hat, die kleiner oder im Wesentlichen gleich einer maximalen Abmessung, gemessen senkrecht zur Drehachse (X), des Außenrands (16) des Gehäuses (5a) ist.

4. Fahrzeugsitz (1) nach einem der Ansprüche 1 bis 3, wobei das Halteglied (40;40') auf eine um eine Schwenkachse (P) schwenkbare Weise an der Sitzfläche (2) angebracht ist, wobei die Schwenkachse (P) parallel zur Drehachse (X) ist und innerhalb der Einhüllenden (E) liegt, die den radialen Raum des Gehäuses (5a) des Gelenkmechanismus (5) definiert.

5. Fahrzeugsitz (1) nach einem der Ansprüche 1 bis 4, wobei das Neutralisationssystem (9;9') außerdem eine Kopplungsvorrichtung (39,44) aufweist, die geeignet ist, das Halteglied (40;40') aus der zurückgezogenen Position in die Halteposition zu bewegen, wenn sich das Neutralisationsglied (33;33') aus der inaktiven Position in die aktive Position bewegt.

6. Fahrzeugsitz (1) nach Anspruch 5, wobei die Kopplungsvorrichtung aufweist:
- zwei Kopplungselemente, von denen das eine aus einem Stift (39) und das andere aus einer Führungsfläche (44) besteht und das eine von dem Neutralisationsglied (33;33') und das andere von dem Halteglied (40;40') getragen wird, wobei die Führungsfläche (44) einen Nockenabschnitt (44a) und einen Hakenabschnitt (44b) aufweist,
- ein Vorspannglied (46), das geeignet ist, das von dem Halteglied (40;40') getragene Kopplungselement gegen das von dem Neutralisationsglied (33;33') getragene Kopplungselement zu halten,
wobei die Kopplungselemente konfiguriert sind, derart, dass der Stift (39) entlang des Nockenabschnitts (44a) der Führungsfläche (44) bewegt wird, wenn das Neutralisationsglied (33;33') aus der inaktiven Position in die aktive Position bewegt wird, und derart, dass der Stift (39) in dem Hakenabschnitt (44b) der Führungsfläche (44) angeordnet ist, wenn das Neutralisationsglied (33;33') in der aktiven Position ist.

7. Fahrzeugsitz (1) nach einem der Ansprüche 1 bis 6, wobei das Neutralisationssystem (9;9') außerdem eine Freigabevorrichtung (50,55;50',55') aufweist, die geeignet ist, in einer vorgegebenen Position der zweiten Wange (15) bezüglich der ersten Wange (14) das Halteglied (40;40') aus der Halteposition in die zurückgezogene Position zu bewegen, wenn die Rückenlehne (4) aus der heruntergeklappten Position in Richtung Aufrichten in die aufgerichtete Position geschwenkt wird.

8. Fahrzeugsitz nach Anspruch 7, wobei ein wesentlicher Teil der Freigabevorrichtung (50,55;50',55') in dem radialen Raum des Gehäuses (5a) des Gelenkmechanismus (5) untergebracht ist.

9. Fahrzeugsitz (1) nach Anspruch 7 oder 8, wobei die Freigabevorrichtung aufweist:
- einen Anschlag (55,55'), der zusammen mit der Rückenlehne (4) entlang einer Trajektorie verschiebbar ist, und
- eine Klaue (50;50'), die dem Halteglied (33;33') zugeordnet ist und sich in die Trajektorie des Anschlags (55,55') hinein erstreckt, wobei die Klaue (50;50') geeignet ist, in der vorgegebenen Position der zweiten Wange (15) bezüglich der ersten Wange (14) den Anschlag (55;55') zu behindern, wenn die Rückenlehne (4) in Richtung Aufrichten geschwenkt wird.

10. Fahrzeugsitz (1) nach Anspruch 9, wobei die Klaue (50) zu einer angenäherten Position hin vorgespannt ist, in welcher die Klaue (50) in Kontakt mit dem Halteglied (40) ist, und in eine weggerückte Position, in welcher die Klaue (50) von dem Halteglied (40) weggerückt ist, verschiebbar ist, wenn die Rückenlehne (40) aus der aufgerichteten Position in Richtung Herunterklappen in die heruntergeklappte Position geschwenkt wird.

11. Fahrzeugsitz (1) nach Anspruch 9 oder 10, wobei die Rückenlehne (4) eine Armierung (4a) aufweist, die zwei sich gegenüberliegende Seitenflächen (4i;4e) hat, die im Wesentlichen senkrecht zur Drehachse (X) sind, wobei das Neutralisationsglied (33;33') und das Halteglied in der Nähe einer der Seitenflächen (4i;4e) der Armierung (4a) der Rückenlehne (4) angeordnet sind und der Anschlag (55) an der besagten Seitenfläche (4i;4e) befestigt ist.

12. Fahrzeugsitz (1) nach Anspruch 9 oder 10, wobei der Anschlag (55') so angebracht ist, dass er bezüglich der Rückenlehne (4) verschiebbar ist zwischen einer entkoppelten Position, in welcher der Anschlag (55') stationär bezüglich der Rückenlehne (4) ist, und einer gekoppelten Position, in welcher der Anschlag (55') mit der Rückenlehne (4) gekoppelt ist, wobei der Anschlag (55') mit dem Neutralisationsglied (33') verbunden ist, derart, dass in der inaktiven Position des Neutralisationsglieds (33') der Anschlag (55') in der entkoppelten Position ist, und in der aktiven Position des Neutralisationsglieds (33') der Anschlag (55') in der gekoppelten Position ist.

13. Fahrzeugsitz (1) nach Anspruch 12, wobei die Freigabevorrichtung (50,55') außerdem einen Ring (70') aufweist, der mit der zweiten Wange (15) fest verbunden ist und sich entlang der Drehachse (X) erstreckt, wobei der Anschlag (55') auf eine um die Drehachse (X) schwenkbare Weise angebracht ist und in der gekoppelten Position des Anschlags (55') mit dem Ring (70') gekoppelt ist und in der entkoppelten Position des Anschlags (55') von dem Ring (70') weggerückt ist.

14. Fahrzeugsitz (1) nach Anspruch 13, wobei das Verriegelungssystem (17) eine von der zweiten Wange (15) getragene Innenverzahnung (20) und mindestens ein Korn (18) aufweist, das im Innern der Aufnahme des Gehäuses (5a) angeordnet und darin in eine bezüglich der Drehachse (X) radiale Richtung verschiebbar ist, wobei das Korn (18) mit einer Außenverzahnung (19) versehen ist, die mit der Innenverzahnung (20) der zweiten Wange (15) zusammenwirken kann, wobei im verriegelten Zustand des Verriegelungssystems (17) die Außenverzahnung (19) des Korns (18) im Eingriff mit der Innenverzahnung (20) der zweiten Wange (15) ist und im entriegelten Zustand des Verriegelungssystems (17) die Außenverzahnung (19) des Korns (18) von der Innenverzahnung (20) der zweiten Wange (15) weggerückt ist, wobei der Ring (70') und der Anschlag (55') geeignete ineinander greifbare Verzahnungen, der eine eine Innenverzahnung (60'), der andere eine Außenverzahnung (72'), aufweisen, wobei in der gekoppelten Position des Anschlags (55') die Verzahnung (60') des Anschlags (55') im Eingriff mit der Verzahnung (72') des Rings (70') ist und in der entkoppelten Position des Anschlags (55') die Verzahnung (60') des Anschlags (55') weggerückt von der Verzahnung (72') des Rings (70') ist, wobei die Verzahnungen (60',72') des Rings (70') und des Anschlags (55') die gleiche Zahnteilung haben wie die Verzahnungen (19,20) der zweiten Wange (15) und des Korns (18).

## Claims

1. Vehicle seat (1) comprising:
- a seat cushion (2) and a seat back (4) mounted to pivot on the seat cushion (2) about a rotation axis (X), the seat back (4) having an adjustable raised position and a lowered position,
- at least one articulation mechanism (5) for adjusting the raised position of the seat back (4), the articulation mechanism (5) including a casing (5a) delimiting a housing, a locking system (17) in the housing of the casing (5a) and an operating member (7a) that can be actuated by a user, the casing (5a) having an exterior peripheral edge (16) and a radial overall size defined by a cylindrical envelope (E) that extends along the rotation axis (X) and passes through the outer edge (16) of said casing (5a), the casing (5a) including a first flange (14) attached to the seat cushion (2) and a second flange (15) attached to the seat back (4), the second flange (15) being mounted on the first flange (14) to pivot about the rotation axis (X), the locking system (17) having a locked state in which said locking system (17) prohibits pivoting of the second flange (15) relative to the first flange (14) and an unlocked state in which said locking system (17) allows said pivoting, the operating member (17a) having a rest position toward which said operating member (7a) is urged and being movable toward an actuating position, the operating member (7a) being connected to the locking system (17) in such a way that in the rest position of said operating member (7a) the locking system (7) is in the locked state and in the actuating position of said operating member (7a) the locking system (17) is in the unlocked state,
- a neutralisation system (9; 9') allowing movement of the seat back (4) between the raised and lowered positions, the neutralisation system (9; 9') being outside the casing (5a) of the articulation mechanism (5) and including a neutralisation member (33; 33') that can be actuated by the user and a retaining member (40; 40'), the neutralisation member (33; 33') being movable between an inactive position in which said neutralisation member (33; 33') allows movement of the operating member (7b) between its rest and actuating positions and an active position in which said neutralisation member (33; 33') places the operating member (7b) in the actuating position, the retaining member (40; 40') being movable relative to the seat cushion (2) between a retaining position in which said retaining member (40; 40') holds the neutralisation member (33; 33') in the active position and a retracted position away from the retaining position,
said vehicle seat (1) being **characterised in that** at least an essential part of the neutralisation member (33; 33') and at least an essential part of the retaining member (40; 40') are contained within the radial overall size of the casing (5a) of the articulation mechanism (5).

2. Vehicle seat (1) according to claim 1, wherein the first flange (14) and the second flange (15) each have an exterior lateral surface on the side opposite the housing and substantially perpendicular to the rotation axis (X) and the seat cushion (2) includes a flange (30) facing the exterior lateral surface of either the first flange (14) or the second flange (15), the neutralisation system (9; 9') being between the flange (30) and the exterior lateral surface of said flange (14, 15).

3. Vehicle seat (1) according to claim 1 or 2, wherein the neutralisation member (33; 33') is mounted to pivot about the rotation axis (X) and has a maximum dimension measured perpendicularly to the rotation axis (X) less than or substantially equal to a maximum dimension of the outer edge (16) of the casing (5a) measured perpendicularly to the rotation axis (X).

4. Vehicle seat (1) according to any one of claims 1 to 3, wherein the retaining member (40; 40') is mounted on the seat cushion (2) to pivot about a pivot axis (P) parallel to the rotation axis (X), said pivot axis (P) being inside the envelope (E) defining the radial overall size of the casing (5a) of the articulation mechanism (5).

5. Vehicle seat (1) according to any one of claims 1 to 4, wherein the neutralisation system (9; 9') further includes a coupling device (39, 44) for moving the retaining member (40; 40') from the retracted position to the retaining position when the neutralisation member (33; 33') is moved from the inactive position to the active position.

6. Vehicle seat (1) according to claim 5, wherein the coupling device includes:
- two coupling elements (1), one consisting of a pin (39) and the other consisting of a guide surface (44) and one carried by the neutralisation member (33; 33') and the other carried by the retaining member (40; 40'), the guide surface (44) including a cam portion (44a) and an attachment portion (44b),
- a solicitation member (46) adapted to hold the coupling element carried by the retaining member (40; 40') against the coupling element carried by the neutralisation member (33; 33'),
the coupling elements being such that the pin (39) is moved along the cam portion (44a) of the guide surface (44) when the neutralisation member (33; 33') is moved from the inactive position to the active position and such that the pin (39) is placed in the attachment portion (44b) of the guide surface (44) when the neutralisation member (33; 33') is in the active position.

7. Vehicle seat (1) according to any one of claims 1 to 6, wherein the neutralisation system (9; 9') further includes a release device (50, 55; 50',55') for moving the retaining member (40; 40') from the retaining position to the retracted position in a particular position of the second flange (15) relative to the first flange (14) when the seat back (4) is pivoted in a raising direction from the lowered position toward the raised position.

8. Vehicle seat (1) according to claim 7, wherein an essential part of the release device (50, 55; 50', 55') is contained within the radial overall size of the casing (5a) of the articulation mechanism (5).

9. Vehicle seat (1) according to claim 7 or 8, wherein the release device includes:
- a stop (55; 55') movable conjointly with the seat back (4) along a path, and
- a lug (50; 50') associated with the retaining member (33; 33') and extending into the path of the stop (55; 55'), the lug (50; 50') being adapted to interfere with the stop (55; 55') in the particular position of the second flange (15) relative to the first flange (14) when the seat back (4) is pivoted in the raising direction.

10. Vehicle seat (1) according to claim 9, wherein the lug (50) is urged toward a close together position in which said lug (50) is in contact with the retaining member (40) and movable toward a far apart position in which said lug (50) is away from the retaining member (40) when the seat back (4) is pivoted in a lowering direction from the raised position toward the lowered position.

11. Vehicle seat (1) according to claim 9 or 10, wherein the seat back (4) includes a frame (4a) having two opposite lateral surfaces (4i; 4e) substantially perpendicular to the rotation axis (X), the neutralisation member (33; 33') and the retaining member being on the same side as one of the lateral surfaces (4i; 4e) of the frame (4a) of the seat back (4), the stop (55) being fixed to said lateral surface (4i; 4e).

12. Vehicle seat (1) according to claim 9 or 10, wherein the stop (55') is mounted so as to be movable relative to the seat back (4) between a detached position in which said stop (55') is immobile relative to the seat back (4) and an attached position in which said stop (55') is attached to the seat back (4), the stop (55') being connected to the neutralisation member (33') in such a manner that in the inactive position of said neutralisation member (33') said stop (55') is in the detached position and in the active position of said neutralisation member (33') said stop (55') is in the attached position.

13. Vehicle seat (1) according to claim 12, wherein the release device (50'; 55') further includes a bush (70') attached to the second flange (15) and extending along the rotation axis (X), the stop (55') being mounted to pivot about the rotation axis (X) and being attached to the bush (70') in the attached position of said stop (55') and away from the bush (70') in the detached position of said stop (55').

14. Vehicle seat (1) according to claim 13, wherein the locking system (17) includes interior teeth (20) carried by the second flange (15) and at least one arm (18) mounted to be movable inside the housing of the casing (5a) in a radial direction relative to the rotation axis (X), the arm (18) having exterior teeth (19) adapted to cooperate with the interior teeth (20) of the second flange (15), the exterior teeth (19) of the arm (18) meshing with the interior teeth (20) of the second flange (15) in the locked state of the locking system (17) and being away from the interior teeth (20) of the second flange (15) in the unlocked state of the locking system (17), the bush (70') and the stop (55') having respective teeth, namely interior teeth (60') on one and exterior teeth (72') on the other, adapted to cooperate with each other, the teeth (60') on the stop (55') meshing with the teeth (72') on the bush (70') in the attached position of said stop (55') and the teeth (60') on the stop (55') being away from the teeth (72') on the bush (70') in the detached position of said stop (55'), the teeth (60', 72') on the bush (70') and the stop (55') having a pitch identical to that of the teeth (19, 20) on the second flange (15) and the arm (18).
